# EUROPEAN PATENT SPECIFICATION

(11) **EP 0 584 127 B1**
(45) Date of publication and mention of the grant of the patent: **12.03.1997**
(21) Application number: 92909566.9
(22) Date of filing: 05.05.1992
(51) Int. Cl.: B01D 9/00

(54) **METHOD AND APPARATUS FOR THE CONTROL OF SOLIDIFICATION IN LIQUIDS**
VERFAHREN UND VORRICHTUNG ZUM REGELN DER ERSTARRUNG VON FLÜSSIGKEITEN
PROCEDE ET DISPOSITIF POUR MAITRISER LA SOLIDIFICATION DE LIQUIDES

(30) Priority: 03.05.1991 GB 9109640; 06.03.1992 GB 9204829
(43) Date of publication of application: 02.03.1994
(73) Proprietor: ACTON, Elizabeth, Cambridge GB3 0DF (GB); MORRIS, George John, Bourn, Cambridge CB5 7SX (GB)
(72) Inventor: ACTON, Elizabeth, Cambridge GB3 0DF (GB); MORRIS, George John, Bourn, Cambridge CB5 7SX (GB)
(74) Representative: Wain, Christopher Paul
(86) International application number: GB9200818
(87) International publication number: WO9220420

(56) References cited:
- DE-A- 840 389
- FR-A- 1 099 427
- FR-A- 1 418 859
- SU-A- 1 153 942
- JOURNAL OF PHARMACEUTICAL SCIENCES. vol. 56, no. 11, November 1967, WASHINGTON US pages 1373 - 1385; D.M. SKAUEN: 'SOME PHARMACEUTICAL APPLICATIONS OF ULTRASONICS' CRISTALLIZATON

## Description

### Field of the invention

This invention relates to a method of controlling solidification of liquids. The term solidification as used herein means the change in state from a liquid with no bulk molecular ordering to a solid with a bulk crystalline molecular structure.

The invention also relates to apparatus in which such solidification processes can be carried out.

The liquids of interest include lipid and/or aqueous systems (including solutions and emulsions) and other systems which are fluid, under normal pressure, in the temperature range -20° to 100°C.

The invention relates in particular to:
(a) Freezing of foodstuffs which are normally consumed in the frozen state, including ice cream, frozen yoghurts, sorbets and ices.
(b) Freezing of oil-in-water emulsions whose structure is irreparably damaged by freezing and thawing, eg. cream and various sauces.
(c) Production of foodstuffs and other consumer items having a high lipid content, such as cosmetics and polishes. In the case of foodstuffs, products may be entirely lipid (for example shortenings used in baking); or they may comprise a high proportion of lipid combined with sugar and other additives (for example chocolate and other similar confectionery); or they may be water-in-fat emulsions (for example margarines, halvarines, butter).
   (d) Chemical processing of liquids, including for example freeze-concentration and fractionation including the dégorgement à la glace process in champagne manufacture.
   (e) Crystallization of solutes in supersaturated solutions.
   (f) Freeze drying or lyophilization is a process in which a sample is frozen, then a solvent (normally water) is removed from the frozen sample by sublimation. Currently many materials are freeze dried. These range from pharmaceuticals such as vaccines, antibiotics, industrial enzymes, fine chemicals etc to foodstuffs such as coffee, milk etc.
   (g) Other foodstuffs with aqueous content.

### Background to the invention

### (A) The problem

It is a disadvantage with known methods of freezing liquids that some liquids once their temperature has been reduced to below the melting point do not freeze, or do not freeze straightaway. Some liquids freeze into solids having an undesirable crystal form, or having an undesirable range and proportion of particular crystal sizes and orientation. In short it is difficult reliably to induce and/or control nucleation of liquids during freezing.

Solidification of liquids involves two processes - nucleation of crystals, followed by growth of those crystals to produce an ordered solid. There are several related problems associated with the solidification process:
1. Initial nucleation. Many liquids have a strong tendency to supercool below their melting point before initial nucleation occurs. The consequent random nature of the nucleation limits the control of commercial solidification processes, including in polymorphic materials control of the polymorph formed.
2. Crystal Growth. The crystalline structure of a solidifying melt is dependent on factors such as the density of nucleation sites, cooling rate, composition of phases present etc.
   These nucleation/crystallisation phenomena lead generally to practical difficulties in controlling the solidification process and thus in producing solid products having particular desired characteristics, for instance:-
   (a) The quality of products normally consumed in the frozen state is largely determined by the size of the ice crystals in the products. Those containing large ice crystals are generally considered to have poor customer acceptability. It is desirable to manufacture ice cream which a high proporation of ice crystals smaller than 55 micrometers diameter. Perceived coarseness in ice cream is dependent upon the proportion of ice crystals above this size, a higher proportion resulting in a coarser taste. An additional factor which determines product quality is the sensitivity to ice recrystallization during isothermal storage or temperature abuse. Reducing the initial mean crystal size and narrowing of the crystal distribution will be beneficial.
   (b) In oil-in-water emulsions such as single cream (typically about 18% fat content) and various sauces the formation of large ice crystals during freezing leads to a coagulation of the lipid content of the emulsion; on thawing the water and lipid remain separated. It is desirable to freeze these emulsions with small crystals so that the emulsions can be thawed with minimum separation.
   (c) Shortenings are water free lipid products, the rheology of which depends on the solid fat content and the interactions between fat crystals. These crystals form a three dimensional lattice network (Juriaanse & Heertje, Food Microstructure 7, 181-188, 1988) and the commercially important characteristic, fat hardness, is directly related to the microstructure of the crystal lattice (Heertje et al., Food Microstructure 7, 189-193, 1988). For example, in puff pastry shortening a finer crystal structure is preferred to a coarser structure.
   (d) In water-in-fat emulsions, such as margarines and halvarines, the fat phase is continuous and the method of nucleation/crystal growth determines the product's consistency, firmness and microbial stability (Juriaanse & Heertje, 1988; Heertje, 1988). Improved control over the nucleation and crystal growth could allow the formulation of new products.
   (e) Cream is an oil-in-water emulsion which is 'ripened' for use in butter and ice cream manufacture. The cream is held at reduced temperatures to allow a proportion of the milk fat in the cream globules to crystallize (the Lipid Handbook, eds F.D. Gunstone, J.L. Harwood & F.B. Padley, pp 224-225, Chapman & Hall, London, 1986). To optimise this crystallization a well defined temperature regime must be applied, which depends strongly on the composition of the milk fat, itself subject to seasonal variations. Due to the problems associated with nucleation of lipids, further increased by the small globule size in cream, it is necessary to hold milk at low temperatures for several hours to ensure nucleation and crystal growth.
   (f) The quality of chocolate products is determined largely by the crystal form of triacylglycerols present in the chocolate. It is generally agreed that the preferred crystal structure is the beta form. However, complicated and time consuming processing steps are required to obtain chocolate containing the desired crystal form.
   (g) Crystallization is also a commonly used ethod of chemical processing of liquids for example the purification of fatty acids and their derivatives (The Lipid Handbook. eds F.D. Gunstone, J.L. Harwood & F.B. Padley, pp 171-172, Chapman & Hall, London, 1986). In this case crystallization is either from the melt (dry fractionation) or from a solvent (solvent fractionation). 'Winterization', is a special case of fractionation deriving its name from the early practice of using cold winter weather to separate a solid fraction from cottonseed oil. The liquid fraction thus obtained does not suffer from unsightly deposits and does not cause emulsion separation on refrigeration of mayonnaise or salad dressings made from it.
      Another purification process, dewaxing, is used to remove naturally occurring waxes found in, for example, sunflower, safflower, corn and sesame oils (Ibid pp 213-215).
      In addition, freeze concentration of aqueous samples is employed when substances are either heat labile, for example in the production of orange and other fruit concentrates, or carry health risks, for example radioactive compounds.
      A special case is the dégorgement à la glace process in champagne manufacture. The unwanted yeast formed in secondary bottle fermentation is collected at the neck by careful inversion of the bottle. The neck is then placed in a freezing bath and the yeast sediment is frozen into a plug which is then removed.
      To obtain good purification by separation, crystals should be firm and of a uniform spherical size ice crystals should be >500 microns diameter for efficient filtration. If a mass of very small crystals is formed, these are difficult to separate by filtration.
   (h) In freeze drying the freezing process influences the size and shape of the ice crystals formed in the sample and, therefore, the structure of the porous solid that remains after drying. The structure of the ice crystals determines the characteristics of the sublimation step, and so the freezing process also determines the time required to complete the drying stages. It is therefore desirable to control nucleation to promote controlled solidification of samples. In some cases it may be particularly desirable to initiate freezing within a sample at or near its melting point with a small number of large ice crystals in the resulting frozen sample. In this application we describe methods of controlling nucleation in samples frozen outside the freeze drying apparatus.
      In co-pending patent application No. 9122617.5 is described the special case of nucleation of samples within a freeze drying chamber.

### (B) State of the art relating to the invention

### 1. Nucleation in liquids below their melting point.

(a) Crystals of a number of chemicals are known to induce ice nucleation in supercooled water. These chemicals include silver iodide, various sterols, amino acids and 'ice nucleating' bacteria. Whilst the potential use of these substances has been suggested in various food applications, specifically ice creams, serious legislative problems will have to be overcome before their widespread use can be viable.
(b) In some processes, inoculants or 'seed crystals' of the appropriate type are added to a liquid to induce nucleation. This is a practice commonly employed in chocolate manufacture.

### 2. Control of grain structure.

In other processes, inoculants or 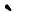 seed crystals of the appropriate type are added to a liquid to control grain structure.
(a) A number of additives are incorporated into ice creams and related products to limit the growth and recrystallisation of ice crystals. Products currently used include various gums, gelatin, polysaccharides and other polymers.
(b) Naturally occurring inhibitors of crystal formation are removed from oils (Deffense E. & Tirtiaux A, J. Amer. Oil Chem. Soc., 60, 473).
(c) Nucleation and crystal growth of liquid products is usually carried out in scrape surface coolers. Scrape surface heat exchangers operate by seeding the bulk liquid with a large number of fine crystals. Margarines, shortenings and related products are now almost exclusively produced in multitube-cooler plants by a process known as the votator process (The Lipid Handbook, eds F.D. Gunstone, J.L. Harwood and F.B. Padley, pp 222-223, Chapman & Hall, London, 1986). Commercial ice cream processing employs an initial seeding step with freezing out of 50% of the available water in a sophisticated scrape surface cooler. Further freezing (hardening) is then completed in conventional blast freezers or tunnels. The texture of commercial ice creams is also largely affected by the incorporation of air, typically up to 50% by volume.

### 3. Tempering to obtain a desired crystal polymorph.

During chocolate processing a tempering step is used to ensure that the preferred beta crystal polymorph is formed and stabilised. Typically the polymorphic forms of chocolate have the following melting points:
- gamma form:: 17°C
- alpha form:: 21-24°C
- beta prime form:: 27-29°C
- beta form:: 34-35°C

Tempering is carried out in specialized equipment in which molten chocolate (at about 45°C) is mixed to ensure an even temperature distribution. The temperature is then reduced to, say, 28°C, which is sufficiently supercooled to initiate nucleation. At this temperature the beta prime and beta crystal forms may co-exist. The temperature is then increased to, say, 30°C, above the melting points of any of the unwanted beta prime crystal forms, to allow crystal growth of the beta form.

Typically following tempering some 6-10% of the chocolate will be in the form of small beta crystals. In this form the chocolate is pourable and on further controlled cooling a stable product is produced.

Other tempering processes are employed during the cold ripening of cream for butter production, for example winter cream is kept for some hours in a tempering sequence at 8, 21 and 12°C according to the Alnarp method (The Lipid Handbook, eds F.D. Gunstone, J.L. Harwood & F.B. Padley, pp 224-225, Chapman & Hall, London, 1986). Also certain shortenings are stored above ambient temperature for a few days (Haighton, A.J., Fette Seifen Anstrichm., 65, 479-482, 1963), during which period a recrystallization process takes place in which mixed crystals "demix" and form other more stable crystals. This leads to larger crystals and slightly softer products.

According to the present invention there is provided a method of controlling the solidification of a liquid comprising the steps of reducing the temperature of the liquid to below its melting point, and subjecting the liquid to ultrasound at a liquid temperature up to 1°C below its melting point to induce vibration and/or cavitation in the liquid so as to control the nucleation and/or crystal growth steps of the solidification process.

The liquid is subjected to ultrasound most preferably at between 0.25°C and 0.5°C below its melting point.

Subjecting a liquid to ultrasound during its solidification can modify both the nucleation and the crystal growth stages of solidification, depending on the stage in the solidification process at which the disturbance is applied. The modification is thought to be due to the disturbance inducing "cavitation". Small bubbles of the vapour phase of dissolved gas form out of a liquid as a wave of disturbance passes through the liquid. These bubbles collapse after the wave has passed, causing a large pressure change which in turn induces nucleation in the liquid. Since rate of nucleation is often a limiting factor during solidification of a liquid, subjecting the liquid to a physical disturbance so as to induce cavitation, as in the present invention, can lead to reduced solidification times.

This cavitation could also be achieved using hydro-dynamic means such as a propeller or lifting surface so as to create vortices in the liquid.

One or more pulses of ultrasound can induce nucleation in the liquid. This has the advantage that the initial nucleation temperature of the liquid can be dictated. This method also has the advantage that the technique is chemically non-invasive. The use of vibrations, such as ultrasound, is already an acceptable processing step in certain treatments of foodstuffs, and thus use of the present invention is not likely to encounter legislative difficulties.

Since rate of nucleation is often a limiting factor during solidification of a liquid, subjecting the liquid to ultrasound so as to induce nucleation can lead to reduced solidification times.

The preferred frequency of ultrasound is 16-100 KHz. Above 100 KHz little nucleation can be obtained except at extremely high power. The particularly preferred frequency is between 20 and 40 KHz.

The size of the ice crystals may be controlled by the temperature at which the sample is treated, irradiating slightly below the melting temperature will result in the formation of a small number of large crystals in the final product. This has an advantage in many applications, such as freeze drying or fractionation, in which larger crystals (>500 micrometres [microns]) result in a more efficient process.

In a preferred embodiment of the invention, the duration of applied ultrasound is up to 5 seconds, preferably up to 1 second. Prolonged application of ultrasound can result in the formation of many nucleation sites, which is not desired in the invention, as the object is to produce a few large crystals in the solidified product.

In liquids where crystals already exist, new crystals may be formed by fragmentation either due to cavitation or other effects induced by the ultrasound, such as acoustic streaming. This phenomenon is referred to as grain refinement or grain multiplication.

The present invention provides a method of controlling the solidification of a liquid, wherein the temperature of the liquid is maintained at a temperature between its melting point and 1°C below its melting point, and the nucleated or at least partially solidified liquid is subjected to ultrasound so as to reduce the crystal size in the liquid.

The preferred frequencies of ultrasound are as defined above. The ultrasound is preferably applied continuously for at least 10 seconds, either in a single pulse or preferably in a series of pulses of shorter duration.

Irradiating a frozen liquid in this way results in a reduction in crystal size which is of advantage e.g. in ice cream manufacture where large ice crystals give a coarse taste and in frozen emulsions where smaller crystals enable a higher proportion of emulsion to be recovered following freezing and melting of the emulsion.

For many applications the use of ultrasound will modify simultaneously both nucleation and crystal growth. However, these two phenomena may be controlled independently in the invention by applying the disturbance at appropriate different stages of the solidification process. Generally, the ultrasound may be applied to the liquid either before or during the solidification process or following storage.

Ultrasonic vibrations may be generated by any convenient means, in particular using electromagnetic, piezoelectric, electrostrictive or magnetostrictive devices.

The ultrasonic power and frequency required will, in part, be determined by the viscosity, temperature, pressure, presence of solids and gas bubbles, dissolved gas content etc of the fluid to be treated. In general, the desired ultrasonic conditions are those which will result in cavitation within the bulk undercooled fluid to induce nucleation or to cause grain refinement at a growing ice front. This implies high intensity ultrasound which may be generated most readily at the lower ultrasound frequencies.

The efficiency of nucleation in a fluid which is undercooled will be dependent on the extent of undercooling and the density and distribution of the cavitation sites within the fluid. To induce nucleation in undercooled fluids ultrasonic power levels of >2 watts per litre are preferred. The power levels required for grain refinement are >1 watt per sq cm at the surface of the liquid to be treated, preferably.

The sources of ultrasound may be coupled directly to the liquid, but may also be connected indirectly via coupling mechanisms such as horns, waveguides and/or through the walls of a container holding the liquid.

The methods of the invention can easily be used in conjunction with existing solidification processes or appropriate stages in such processes, so as to enhance the results achievable. The ultrasound is applied to the liquid at an appropriate stage before or during a solidification process, depending on whether nucleation or crystal growth or both are to be modified. Generally, the liquid will be cooled in conventional manner before, during or after application of the ultrasound.

Overall, the method of the invention allows solidification of many liquid systems, to be conducted more efficiently and with greater control than was previously possible, leading to a potential to produce better quality products and even possibly new products.

In the present invention, the products to be treated are all flowable liquids or droplets and the ultrasound may be applied directly or indirectly from a transducer coupling through the walls of vessels containing the liquids, via stirrers or drive shafts, or by direct immersion of ultrasonic probes in the liquids. The vessels and stirrers commonly used in chemical and food processing are generally made from stainless steel, which is a reasonably good transmitter of ultrasonic vibrations.

For other applications, for example in freeze drying and in champagne processing, the liquids are in glass containers, which are also good transmitters of ultrasonic vibrations.

The particular form of apparatus used to carry out the methods of the invention will vary according to the liquid to be solidified and will generally depend on the type of apparatus normally used to solidify such liquids. Conveniently, liquid cooling apparatus, modified to include an appropriately positioned and suitably controllable source of physical disturbance, can be used.

The invention provides apparatus for controlling solidification of a liquid, which apparatus comprises:
(a) a reservoir for a liquid substance;
(b) means for reducing the temperature of the liquid substance to between a melting point of the liquid and 1°C below the melting point of the liquid, and
(c) a resonator including means for generating ultrasonic energy, wherein the liquid flows continuously through or over the resonator and wherein the means for generating ultrasonic energy is connected to at least one surface which contacts the liquid as the liquid passes through or over the resonator, thereby inducing vibration in the liquid so as to control crystal growth in the liquid during solidification.

Various embodiments of the invention are now described with reference to the accompanying drawings in which:
Figures 1a and 1b show schematic side views of a tube resonator adapted to operate according to a second aspect of the invention;
Figure 2 shows a schematic side view of a batch ice cream maker adapted to operate according to a second aspect of the invention;
Figure 3 shows a graph of crystal size distribution in a frozen sucrose solution after treatment by a method according to a second aspect of the invention, compared with a control sucrose solution;
Figure 4 shows a graph of crystal volume distribution in the solutions of Figure 3;
Figure 5 shows a photomicrograph of untreated margarine;
Figure 6 shows a photomicrograph of margarine which has been melted and allowed to re-set; and
Figure 7 shows a photomicrograph of margarine which has been melted and then ultrasonically treated according to a second aspect of the invention on subsequent cooling and re-setting.

### 1. Continuous Processing

Continuous processing may be achieved by passing the liquid or partially solidified liquid through an ultrasonic flow cell provided that heat removal takes place when solidification is required. The ultrasonic flow cell may be a simple flow cell, a radial system, or a cylindrical or flat plate reverberatory reactor. Such a cylindrical or flat plate reactor should be driven close to a mechanical resonant frequency.

The operating conditions will vary with liquid flow rate and diameter of the flow cell. A simple way of continuous processing would be to flow the cooled product through conventional pipework which is passed through an ulstrasonic bath which is maintained at a suitable temperature. The ultrasonic power levels required would be determined by the nature of the product to be treated but would be at least 5 watts per litre coolant fluid used. The ultrasonic frequency would be between 16-100 kHz with the preferred being 20-40 kHz.

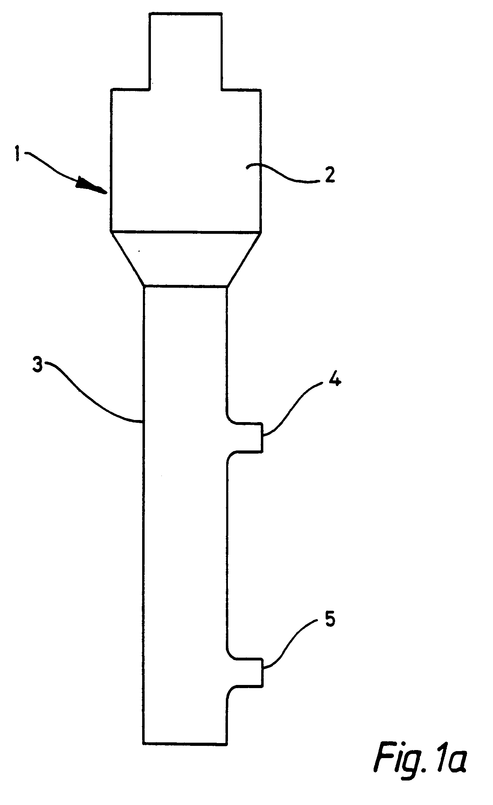

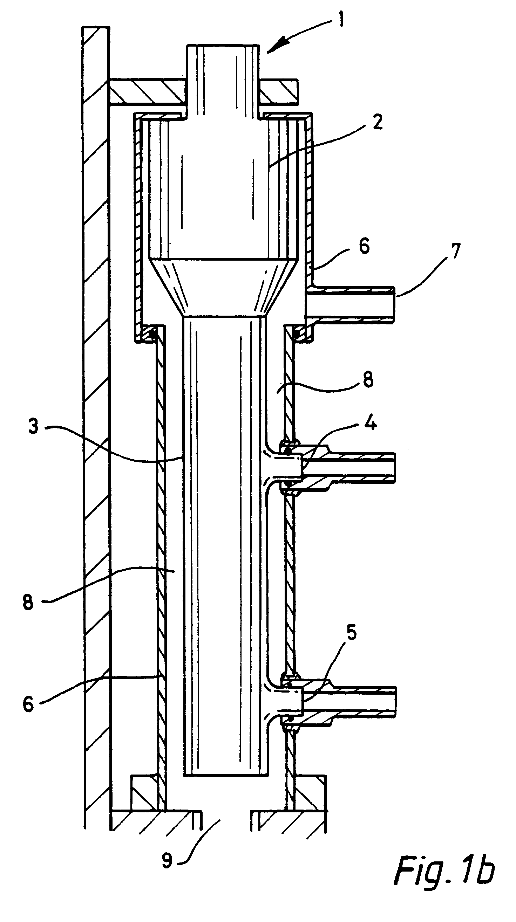

A preferred apparatus for continuous liquid processing according to the invention is a modified tube resonator (Telsonis, Bronschofen, Switzerland). In Figures 1a and 1b a tube resonator shown generally at 1 has a head end 2 containing a piezoelectric ultrasound generator. In operation the whole of the surface 3 resonates at an ultrasonic frequency. Inlet 4 and outlet 5 are positioned at nodal points on the tube. In Figure 1a one use of the tube resonator is shown in which liquid to be processed in pumped into the inlet 4, flows inside the tube resonator and emerges from outlet 5. During this processing the resonating surface 3 is cooled by any appropriate means. Alternatively, as shown in Figure 1b, a suitable coolant may be pumped through the tube resonator with product flowing in a concentric tube. Product flows into the concentric tube through inlet 7, flows through the space 9 defined by the housing 6 and the resonator surface 3 and exits through outlet 9. A further modification would be to use two concentric tube resonators with coolant pumped through the inner tube, with product flowing between the two resonators, the outer tube resonator to be cooled by any appropriate means.

### 2. Scrape Surface Coolers

In its simplest form, a scrape surface cooler is a concentric tube heat exchanger in which the material in an inner tube is externally cooled by a parallel or counter flow of coolant in an outer tube. A steel rotor is fitted with rows of scraper blades pressed against the cooled inside surface of the inner tube. Liquid is processed in a continuous manner and a flowable 'slush' is extruded for further processing.

Using such equipment to carry out the method of the invention, and in cases where the ultrasound is to be applied by means of transducers, the ultrasound is applied to the liquid in the cooler preferably through the inner surface of the cooler. The application of ultrasound to growing crystals results in grain refinement or multiplication by fragmentation. In the scrape surface heat exchanger the region of most rapid crystal growth is near to the surface of the wall. Such positioning of the acoustic source would appear to be most appropriate for the generation of multiple seed crystals. As crystal growth is occuring over the whole inner surface of the scrape surface heat exchanger, maximum benefit would be obtained by applying ultrasound over the whole processing surface. The application of ultrasound at the surface may also remove the requirement for mechanical scraping - ie operate as an "acoustic scraper", this may simplify design. In addition in such a configuration, any heat generated by the transducers will be absorbed by the coolant flow rather than by the liquid to be solidified.

In radial system, transducers may be mounted in a number of configurations, such as:
(i) Attached to the outside of the scrape surface cooler, with the disturbance being transmitted through the outer wall of the cooler, the coolant and finally the inner wall of the cooler. This configuration is potentially simple to fit to existing coolers to modify them for use in the invention, however significant power (for instance, acoustic power when the disturbance takes the form of sonic or ultrasonic vibrations) may be absorbed by the coolant.
(ii) The transducers are sealed through the outer wall and directly attached to the inner wall, optimally with The number, separation and distribution of transducers along the length of the scrape surface cooler should in any case be optimised for the particular material being solidified and the type of heat exchanger being used.

The disturbance may also be applied to the liquid via the central drive shaft of the cooler or via a vibrating probe positioned in the bulk of the liquid, or via a central reverberatory cylinder. Care must be taken when positioning a probe in a system with rotors, and account also taken of heat generated by the transducers within the liquid. In all cases, to achieve maximum benefit it is necessary to cool the vibrating surface.

It will be understood that a combination of one or more of the above configurations may also be of use in the methods of the invention.

### 3. Tempering Units (eg. for chocolate tempering)

As described above, chocolate is tempered either in small batch systems or, more usually, by a continuous process. Where the method of the invention is to be used to nucleate chocolate in a batch system, the ultrasound could either be applied through the wall of the tempering vessel in a manner similar to that described for coolers above, or transducer probe(s) could be placed directly in the vessel.

In continuous systems the molten chocolate is pumped over a series of scrape surface coolers. Transducers will preferably be mounted within the scrape surface coolers in the zone of the tempering unit at which the temperature of the chocolate is such that beta crystals may be nucleated (typically 32-34°C).

The ability to nucleate specifically at a temperature at which beta crystals are formed, using the method of the invention, removes the requirement for tempering and this step may now be omitted in the processing of chocolate products, allowing a more rapid processing time.

### 4. Moulds.

In moulded products such as some ices, sorbets, etc..., the ultrasound may be applied either directly or indirectly through the mould itself.

Many moulded products are manufactured by partial immersion of the moulds on a conveyor belt through a cooling fluid. In this case the ultrasound would be transmitted through the cooling liquid and generated by any suitable means. The ultrasonic frequency would be between 16-100 kHz preferably 20-40 kHz and the power levels required would be >5 watts per litre of cooling fluid.

### 5. Other Continuous Processes.

In the cold ripening or ageing of cream a batch process is currently employed. The application of a physical disturbance to assist solidification should allow the development of continuous, hence more efficient, processes. Following cooling to the appropriate nucleation temperature, milk would be passed through, for example, an ultrasonic flow cell. This may be a simple flow cell, a radial system or a cylindrical or flat plate reverberatory reactor.

Alternatively a "whistle" reactor, such as is used in the manufacture of mayonnaise etc (inducing emulsification by generating vibrations), may be employed. In this latter case, the milk would be perturbed whilst flowing past a vibrating edge or through an oscillating or rotating aperture.

### 6. Post Treatments.

Following either conventional liquid processing, or processing in which ulltrasound has been applied, crystal size in a product may be further modified by passing the product through an ultrasonic flow cell or whistle reactor. The operating conditions will again vary with flow rate, diameter of the flow cell and product type.

### 7. Freeze Drying.

The pre-freezing of relatively small volumes of high value pharmaceuticals and fine chemicals for freeze drying is often carried out in a low temperature bath. A consistent quality of freeze-dried pharmaceuticals or chemicals depends on being able to nucleate all samples at the same temperature. Ultrasound may be applied through the cooling fluid by suitably positioned transducers.

Ultrasound will be applied when the sample temperature is typically up to 1°C below its melting point, and most preferably between 0.25°C and 0.5°C below its freezing point. The duration of the ultrasound is up to 5 seconds and most preferably up to 1 seconds. Ultrasound is applied to initiate nucleation at the required temperature and not applied in a continuous manner to effect grain refinement.

For large volumes of lower value products such as coffee, an aqueous concentrate is frozen and then ground before drying. The freezing process is controlled so that regions of concentrated solution can develop due to the growth of large ice crystals. The freezing methods employed are either a "slow" method or a two step slow-fast freezing process. Ultrasound may be used to produce the desired ice crystal dimensions independently of the cooling conditions employed. If large ice crystals are desired, these may be produced by application of ultrasound when the sample temperature is up to 1°C below its melting point and most preferably between 0.25°C and 0.5°C below its freezing point. The duration of the ultrasound is up to 5 seconds most preferably up to 1 second. Small ice crystals are produced by irradiating the sample at greater levels of supercooling, ie up to 5°C below its melting point, and/or by grain refinement of a partially frozen solution.

### 8. Ice Cream Manufacture.

Ice cream is manufactured in a modified scrape surface cooler. However, a major difference to the other systems described is that commercial ice creams contain a large proportion (up to 50% by volume) of entrapped air.

Ultrasound is known to be effective in degassing solutions, which in this case would modify the desired texture of the ice cream product. This problem might be overcome by:
i) Increasing the initial gas content such that the proportion lost as a consequence of ultrasonic irradiation or application of other physical disturbances will be compensated for.
ii) Carrying out the process under increased pressure to reduce loss of any gas.
iii) Introducing the gas into the partially frozen product rather than at the beginning of the freezing process.

The tube resonator (described above) is especially suitable for the continuous freezing of ice cream. The resonator would be placed in line before the conventional scrape surface heat exchanger. Ice cream mix cooled to its freezing point would be pumped in, ice formation would occur at the cold walls in any of the configurations contained in Figures 1a and 1b. The continuous application of ultrasound would ensure extensive grain refinement at the growing ice front, resulting in the introduction of multiple seed crystals into the conventional scrape surface heat exchanger. This major advantage of the apparatus is that it can simply be fitted in line without major modification to the scrape surface heat exchanger.

### Control.

(i) Temperature sensors may be used to monitor the temperature of the liquid and to activate/control the source(s) of the physical disturbance. In this way the extent of supercooling may be specified, monitored and appropriately controlled.
(ii) The attenuation of an acoustic signal by a fluid will be determined in part by the proportion of the fluid which has nucleated; this may provide a means of control of the solidification process. A separate system, to generate for example an ultrasonic signal and to measure its intensity at a distance or following reflection, may be used to control the characteristics of the disturbance used to initiate nucleation.

Alternatively the ultrasound source itself may be used for control, by the appropriate positioning of an appropriate receiver (for instance, an ultrasonic receiver).

One example of appropriate control would be in generating the optimum amount of seed crystal in chocolate manufacture. In other systems, following nucleation of seed crystals the acoustic characteristics would be switched to the optimum parameters for grain refinement.

Finally, information on the proportion of the system which has nucleated could be used to control temperature, especially in those applications which require tempering.

In some materials it is possible to induce nucleation of too high a proportion of crystals for further processing. For example with chocolate, excessive crystallization during tempering makes the product highly viscous, creating dosing and flattening problems. However, irradiation by vibrations such as ultrasound will reduce the effective viscosity in such a case, yielding a highly crystallized, flowable material.

A suitable method of determining the proportion of crystals in a fat is by ultrasonic means; therefore, online measurements could be used to control nucleation and crystal growth in fats and thus increase the efficiency of the solidification process.

### Example 1

Initiation of crystal growth in an oil. 10 ml aliquots of commercial olive oil ("Extra Vergine", available from Tesco), in glass universals, were placed in a Fryka bath and cooled to -5°C. The oil remained clear. The samples were then irradiated with an acoustic probe (MSE ultrasonic disintegrator Model 150W - 36 KHz). Following twenty 0.1 second pulses of irradiation, there was little optical evidence of crystal formation. However, when the samples were returned to the bath at -5°C, after 15 mins the oil was uniformly opaque. All five unirradiated samples, used as controls, remained clear. Fatty acid analysis demonstrated that the precipitate contained a higher proportion of saturated fatty acids (23%) than the untreated sample (13%). The supernatant was correspondingly enriched with respect to unsaturated species.

### Example 2. Control of solidification of an Aqueous Solution

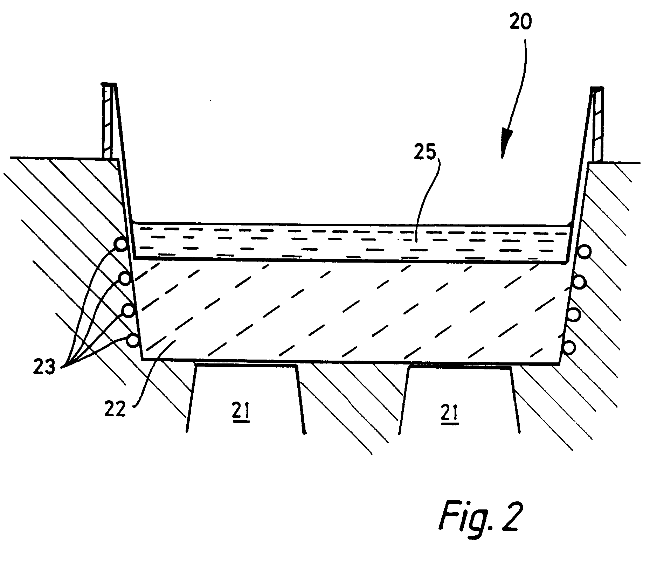

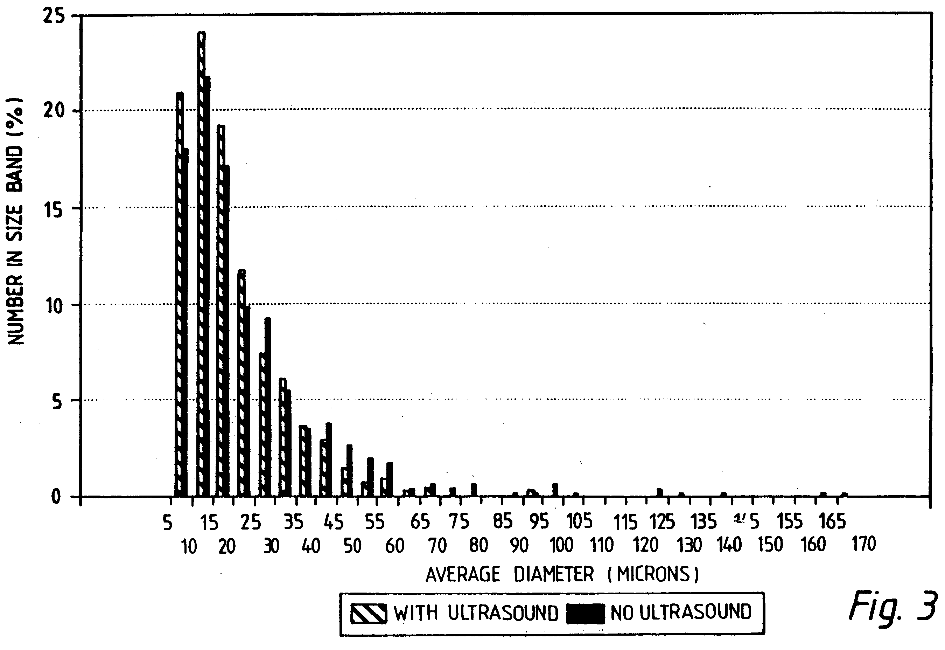

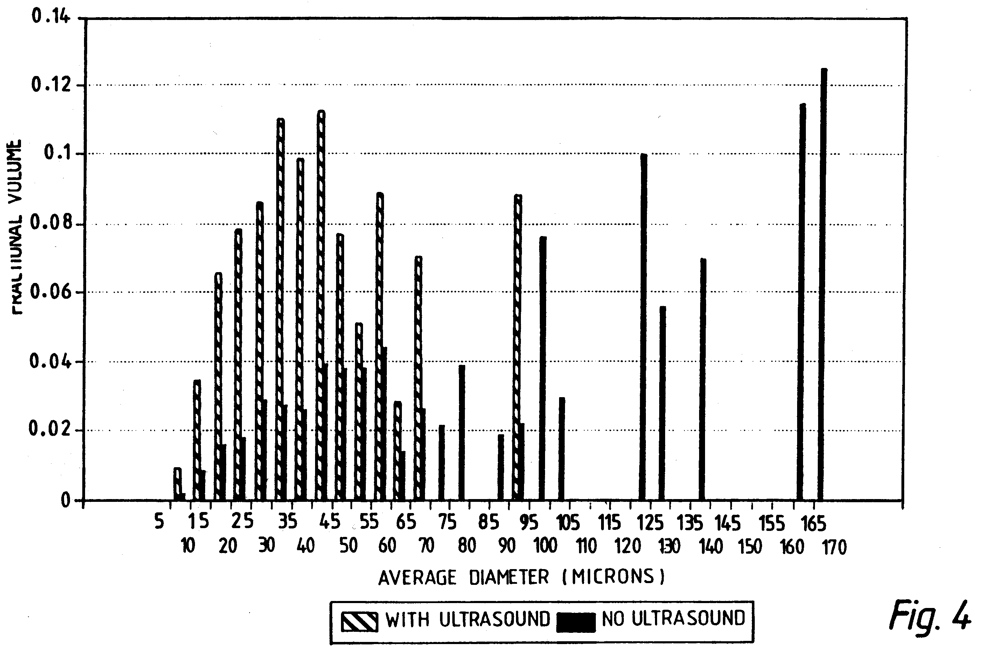

2.1 Description of the system. Referring to Figure 2, an Ariette batch ice cream maker shown generally at 20 was modified to act as a low temperature ultrasonic bath which may be operated as a scrape surface freezer.
   There are six transducers 21 (two shown) operating at 35kHz, frequency matched to two 100 watt generators with controllable power output. Freon TF (Dupont) 22 was used as cooling fluid and for transmission of ultrasound to the scraped surface. Cooling was of the liquid being processed 25 achieved by venting the exhaust from a pressurised liquid nitrogen vessel through copper coils 23. In each batch experiment 300ml of the material was processed. Temperature was monitored in the cooling fluid and in the sample using T-type thermocouples (28 SWG) connected to a data logger. The original scraper blades (not shown) were driven at about 100 rpm to stir and scrape the mix. Application of the ultrasound did not significantly modify the termperature of the coolant and as its temperature was reduced the efficiency of the transmission through the Freon appeared to increase.
2.2 Analysis of Results. Following cooling to -20°C frozen materials were cut into slabs of approx 50x 50x10mm and immersed into liquid nitrogen. Samples were stored in liquid nitrogen before sectioning on a cold microtome followed by photography on a light microscope with cold stage. The 35mm slides were projected and crystals marked out in pen, these outlines were then processed by image analysis to produce data that can be presented as sizing bar charts etc as discussed below.
   i) Unstirred. Sucrose solutions (1.46M, freezing point -2.66°C) were processed, unstirred, with the coolant fluid maintained at -25°C. In the control, ie unirradiated sample, large dendritic ice crystals formed from the cold surfaces. In treated samples ultrasound was pulsed into the system once ice was observed to form at the cold wall. A pulse of ultrasound of approximately 3 secs durations was applied every 30 secs for 10 mins. The ultrasound was clearly seen to fragment the ice front at the cold wall and the crystal fragments were dispersed into the bulk liquid. Following cooling to -20°C the crystal structure was equiaxed. Compared with the control sample the irradiated material was mechanically harder.
   ii) Processed in the Scrape Surface Freezer. The application of ultrasound to a sucrose solution (1.46M) during freezing to -5°C induced a shift in the ice crystal size distribution compared with a control preparation. The results are shown in Figure 3. In the ultrasonically treated sample there was a smaller mean crystal diameter, together with a reduction in the percentage of crystals with a diameter greater than 50 um, form 11.8% in the control preparation to 4.4% in the ultrasonically treated sample. This shift in crystal distribution is even more significant if the ice fraction is calculated as a function of crystal size. The results are shown in Figure 4. In the control, 55% of the water exists in crystals of 50um or larger compared to 33% in the ultrasonically treated sample.
   iii) During Solidification. The effect of ultrasound in inducing grain refinement in partially solidified solutions was examined following conventional freezing of a sucrose solution (1.46M) to -5°C in a scrape surface cooler, ultrasound was then applied intermittently during subsequent solidification to - 20°C. In this experiment the sucrose solution was cooled to -20°C using the Ariette as a cooling bath and with the scraper removed. There was a reduction in mean crystal size from 26um to 21um. The proportion of crystals with a mean diameter greater than 45um reduced from 14% to 7%.

### Example 3

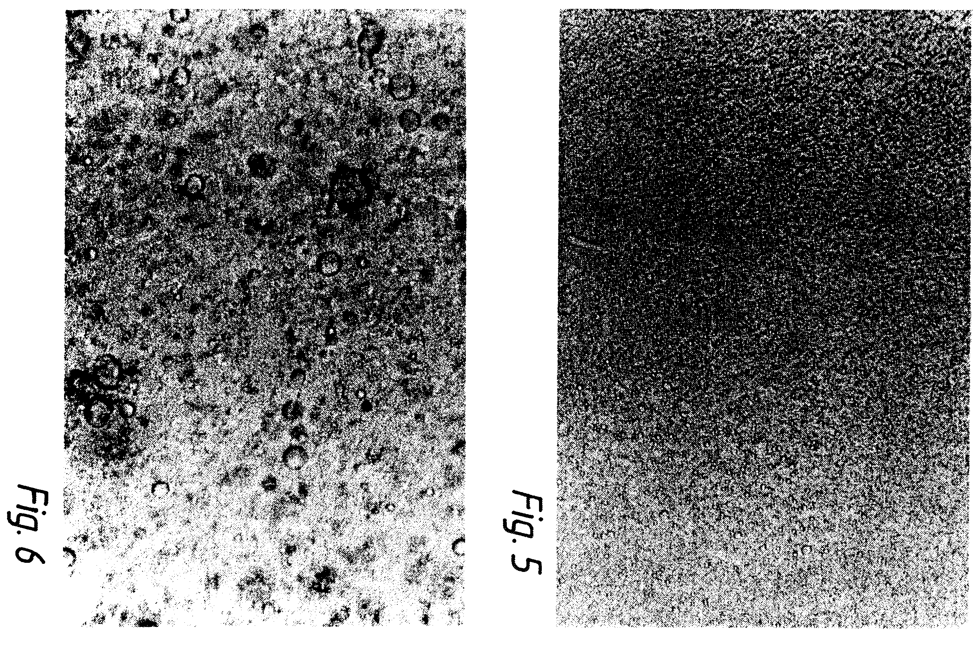

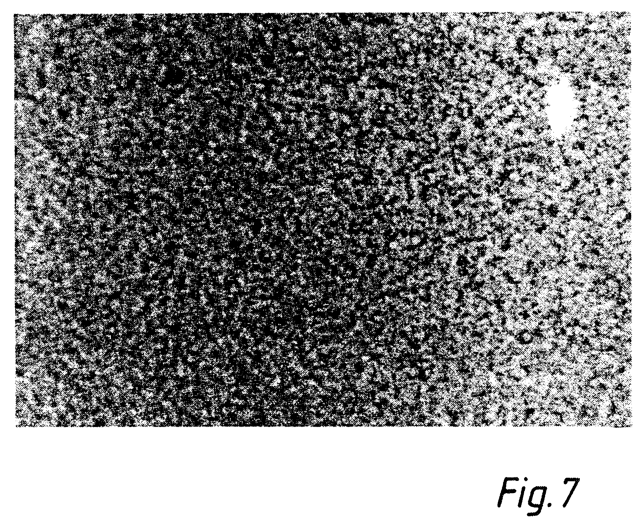

Initiation of the lipid phase change in margarine, a water-in-oil emulsion. The effect of irradiation of margarine with ultrasound during cooling was determined in a stirred vessel. 300g of Flora (Registered Trade Mark) margarine was placed in a pyrex dish (115mm diameter) and melted using a water bath at 50°C. The dish was then positioned in a large tray containing alcohol to a depth of 50mm and cooled to -2.5°C by a cooling coil through which alcohol was pumped from a Fryka cooling bath. The pyrex dish was Positioned above a Stuart Scientific stirrer SM1 and stirred using a 45mm magnetic flea at speed setting 7.5. A lid was placed over the pyrex dish, through which lid were placed thermocouples and an acoustic probe. The thermocouples (28 s.w.g.) were positioned 15, 35 and 55mm from the edge of the dish, and were connected to a data logger (Grant Instruments, Cambridge, 1200 series). The ultrasonic probe (Lucas Dawe Ultrasonics, Model 250 Sonifier, fitted with a tapered micro tip) was positioned 40mm below the surface of the melted margarine.
   Care was taken that the positioning of the acoustic probe and the thermocouples, the cooling bath temperature and the stirring rate were all constant from experiment to experiment. The margarine was irradiated with ultrasound, 25 x 0.1 second pulses at 30, 27.5, 25 and 20°C. When the sample had cooled to 10°C it was then transferred to plastic universals for long-term storage at 20°C.
   Margarine which had been melted and then allowed to set remained semi-fluid on storage and was a brighter yellow in colour than the original product. The ultrasonically treated margarine was significantly firmer than the untreated sample and was a paler yellow, ie. in consistency and colour it remained similar to the untreated product.
   Light microscopy confirmed these differences. In comparison with the original product (Figure 5), the product which had been melted and re-set (Figure 6) contained large water droplets, the solid lipid appearing as amorphous fat and spherulites, apparently suspended in an oil. In the product which had received the ultrasonic treatment (Figure 7) the water droplets were similar in size and distribution to those in the original product. As in the original product, the lipid appeared continuous with no evidence of a lipid phase separation, suggesting that co-crystallization of lipids had occurred.

### Example 4

### Control of freezing of oil-in-water emulsions: Single cream.

10 ml samples of commercially produced pasteurized single cream (approximately 19.3% fat content) were frozen in
   (i) A domestic freezer at -24°C
   (ii) A simulated scrape freezer cooled with a brine/ice water mixture at -19°C (sample cooling rate c. 20°C per min). The brine/ice mixture was contained in an ultrasonic cleaning bath (Kerry Model PVL55) which allowed sonication of the test liquid during freezing at a power density of c. 2kWm⁻² (determined calorimetrically) at 38 kHz.
   Comparison, with the starting material, of thawed samples previously frozen
   (i) in glass phials in the domestic freezer
   (ii) in the scrape freezer without ultrasound
   (iii) in the scrape freezer continuously sonicated during freezing
   showed the following:
   In samples from (i) and (ii) the emulsion was broken, with lipid arid aqueous components apparently completely separated. There was no obvious difference between the results of the two freezing regimes. In most samples from (iii) some very slight breaking of the emulsion was visible, in some samples, more; the extent appeared to beta function of the starting condition (age, supplier) of the cream. Gentle centrifuging of 50g of the thawed samples confirmed these qualitative conclusions:
   Procedure (i) resulted in 40% (+/- 3%) of aqueous components separating;
   Procedure (ii) 37% (+/- 4%);
   Procedure (iii) 6.2% (+/- 1.5%), ie. superior results when the thawed emulsion was solidified using the method of the present invention.

### Example 5

### Control of ice crystal size for freeze drying

1 ml aliquots of a 1.2M sucrose solution (freezing point - 2.4°C) contained in glass freezing drying ampoules were cooled for 15 min in a low temperature bath maintained at either -3.5°C or -7.5°C. Ice was nucleated by irradiation for 5 seconds with ultrasound in an ultrasonic bath (Kerry model PUL 55) containing water at 0°C, the samples were then placed back into the low temperature bath for a further 5 min. Following nucleation at low levels of supercooling (1°C) a few large crystals were observed to grow from a disc crystal into a stellar dendrite. In many cases growth of a single ice crystal was observed. With more extensive supercooling (5°C) a rapid solidification of the system occurs with multiple nucleation sites and small ice crystal size.

The samples were then cooled to -40°C on the shelves of a freeze drier and then freeze dried. The resulting freeze dried plugs differed significantly. The samples nucleated near to the melting point (-3.5°C) had large pores, those samples nucleated at a significant level of supercooling (-7.5°C) had a finer pore structure clearly reflecting the differences in the initial ice crystal structure. For many applications a large pore size, which leads to enhanced drying is desired.

These results demonstrate that ultrasound may be employed to control ice crystal morphology in a sample for freeze drying. Other methods of ice nucleation, ie the use of crystals of silver iodide or the addition of "ice nucleating bacteria" are not practical as they contaminate the sample.

### Example 6

### Purification of a lipid by precipitation from a solvent Crude Lanolin (Croda Chemicals LA 1715) was dissolved by heating to 75°C in ethyl acetate (British Drug Houses) to give a 25% w/v solution. Samples (100 ml in a Pyrex beaker) were then cooled to +5°C by partial immersion in a low temperature bath (Fryka) left for 15 minutes at 5°C and centrifuged. Samples were irradiated with ultrasound from an ultrasonic probe (Telsonics model UHG-300/SE-7-300) operating at 36 KHz, one second pulse per minute.

In the irradiated sample a significantly larger percipitate, 55% of total sample was formed than in the control (40% of sample).

### Example 7

### Nucleation and grain refinement using a tube resonator

A tube resonator (Telsonic, 37kHz, 150 watt, length 297mm) was modified by drilling holes at the nodal points allowing flow of liquid inside the tube. This was cooled by immersion in a low temperature alcohol bath (Fryka) and the liquid to be processed suitably pre-cooled was pumped through the resonator (see Figure 1a). The efficient production fo a dense suspension of fine crystals has been demonstrated for an aqueous solution of sucrose (1.46M, Mpt -2.66°C) with a bath temperature of -25°C and for olive oil with a bath temperature of -5°C.

We have also examined the arrangement of passing a coolant through the resonator with the product flowing co-axially on the outside of the resonator (Figure 1b). In a prototype constructed with an outer tube of perspex. ice formation and efficient grain refinement at the resonator wall has been observed with a solution of sucrose (1.46M) in this case the coolant liquid was at -10°C.

## Claims

1. A method of controlling the solidification of a liquid comprising the steps of reducing the temperature of the liquid to below its melting point, and subjecting the liquid to ultrasound at a liquid temperature up to 1°C below its melting point to induce vibration and/or cavitation in the liquid so as to control the nucleation and/or crystal growth steps of the solidification process.

2. A method as claimed in claim 1, in which the frequency of ultrasound is between 16 and 100 kHz.

3. A method as claimed in claim 2, in which the frequency of ultrasound is between 20 and 40 kHz.

4. A method as claimed in any preceding claim comprising the step of subjecting the liquid to ultrasound at a liquid temperature between 0.25°C and 0.5°C below its melting point.

5. A method as claimed in any of claims 1 to 4 in which the ultrasound is applied for up to 5 seconds.

6. A method as claimed in claim 5 in which the ultrasound is applied for up to 1 second.

7. A method of controlling the solidification of a liquid as claimed in claim 1, wherein the temperature of the liquid is maintained at a temperature between its melting point and 1°C below its melting point, and the nucleated or at least partially solidified liquid is subjected to ultrasound so as to reduce the crystal size in the liquid.

8. A method as claimed in claim 7, in which the frequency of ultrasound is between 16 and 100 kHz.

9. A method as claimed in claim 8, in which the frequency of ultrasound is between 20 and 40 kHz.

10. A method as claimed in any of claims 7 to 9, in which the ultrasound is applied for at least 10 seconds.

11. A method as claimed in any of claims 7 to 10, in which the ultrasound is applied in a series of pulses.

12. A method as claimed in any preceding claim in which the liquid is a foodstuff, for example ice cream, a foodstuff in emulsion form, chocolate, coffee, yoghurt.

13. A method of freeze drying a sample comprising the steps of reducing the temperature of the sample to below its melting point, subjecting the sample to ultrasound at a temperature up to 1°C below its melting point to induce a controlled amount of nucleation in the sample, and subjecting the sample to a reduced pressure to sublimate solvent from the sample.

14. Apparatus for controlling solidification of a liquid, which apparatus comprises:
(a) a reservoir for a liquid substance;
(b) means for reducing the temperature of the liquid substance to between a melting point of the liquid and 1°C below the melting point of the liquid, and
(c) a resonator including means for generating ultrasonic energy, wherein the liquid flows continuously through or over the resonator and wherein the means for generating ultrasonic energy is connected to at least one surface which contacts the liquid as the liquid passes through or over the resonator, thereby inducing vibration in the liquid so as to control crystal growth in the liquid during solidification.

15. Apparatus as claimed in claim 14 comprising a scrape surface cooler.

## Patentansprüche

1. Eine Vorgangsweise der Kontrolle der Verfestigung einer Flüssigkeit, bestehend aus den Schritten der Reduktion der Flüssigkeitstemperatur unter ihren Schmelzpunkt und Ansetzen Von Ultraschall auf die Flüssigkeit bei einer Flüssigkeitstemperatur bis zu 1°C unter ihrem Schmelzpunkt, um in der Flüssigkeit Schwingungen und/oder Hohlräume zu erzeugen, um dadurch die Keimbildung und/oder Kristallwachstumsstufen des Verfestigungsprozesses zu kontrollieren.

2. Eine Vorgangsweise nach Anspruch 1, wobei die Frequenz des Ultraschalls zwischen 16 und 100 kHz liegt.

3. Eine Vorgangsweise nach Anspruch 2, wobei die Frequenz des Ultraschalls zwischen 20 und 40 kHz liegt.

4. Eine Vorgangsweise nach einem der oben genannten Ansprüche, bestehend aus den Schritten des Beschusses der Flüssigkeit mit Ultraschall bei einer Flüssigkeitstemperatur zwischen 0,25°C und 0,5°C unter ihrem Schmelzpunkt.

5. Eine Vorgangsweise nach einem der Ansprüche 1 bis 4, wobei der Ultraschall bis 5 Sekunden lang angesetzt wird.

6. Eine Vorgangsweise nach Anspruch 5, wobei der Ultraschall bis 1 Sekunde lang angesetzt wird.

7. Eine Vorgangsweise der Kontrolle der Verfestigung einer Flüssigkeit nach Anspruch 1, wobei die Temperatur der Flüssigkeit auf einer Temperatur zwischen ihrem Schmelzpunkt und 1°C unter ihrem Schmelzpunkt geregelt wird und wobei die keimgebildete oder wenigsten teilweise verfestigte Flüssigkeit Ultraschall angesetzt wird, um die Kristallgröße in der Flüssigkeit zu reduzieren.

8. Eine vorgangsweise nach Anspruch 7, wobei die Frequenz des Ultraschalls zwischen 16 und 100 kHz liegt.

9. Eine Vorgangsweise nach Anspruch 8, wobei die Frequenz des Ultraschalls zwischen 20 und 40 kHz liegt.

10. Eine Vorgangsweise nach einem der Ansprüche 7 bis 9, wobei der Ultraschall wenigsten 10 Sekunden lang angesetzt wird.

11. Eine Vorgangsweise nach einem der Ansprüche 7 bis 10, wobei der Ultraschall als Reihe von Impulsen angesetzt wird.

12. Eine Vorgangsweise nach einem der o.g. Ansprüche, wobei es sich bei der Flüssigkeit um ein Nahrungsmittel, wie z.B. Speiseeis oder ein Nahrungsmittel in emulgierter Form, wie z.B. Schokolade, Kaffee oder Joghurt, handelt.

13. Eine Vorgangsweise des Gefriertrocknens einer Probe, bestehend aus den Schritten der Reduktion der Probentemperatur unter ihren Schmelzpunkt, Ansetzen von Ultraschall auf die Probe bei einer Temperatur bis zu 1°C unter ihrem Schmelzpunkt, um in der Probe ein kontrolliertes Ausmaß an Keimbildung zu erzeugen und Ansetzen eines reduzierten Drucks auf die Probe, um daraus Lösungsmittel zu sublimieren.

14. Gerät zur Kontrolle der Verfestigung einer Flüssigkeit, bestehend aus:
(a) einem Behälter für eine flüssige Substanz;
(b) einer Vorrichtung zum Reduzieren der Temperatur der flüssigen Substanz auf zwischen dem Schmelzpunkt der Flüssigkeit und 1°C unter dem Schmelzpunkt der Flüssigkeit und
(c) einem Resonator einschließlich einer Vorrichtung zum Erzeugen von Ultraschallenergie, wo die Flüssigkeit ununterbrochen durch- oder über den Resonator strömt. Darin ist die Vorrichtung zum Erzeugen von Ultraschallenergie mit wenigstens einer Oberfläche verbunden, die mit der durch- oder über den Resonator strömenden Flüssigkeit in Verbindung steht. Dadurch wird eine Schwingung in der Flüssigkeit so erzeugt, dass das Kristallwachstum in der Flüssigkeit während der Verfestigung kontrolliert wird.

15. Gerät nach Anspruch 14, das weiter einen Kratzoberflächenkühler beinhaltet.

## Revendications

1. Une méthode de contrôle de la solidification d'un liquide comportant les étapes de réduction de la température du liquide jusqu'en-deçà du point de fusion et de soumission du liquide aux ultrasons à une température de liquide atteignant 1°C de moins que son point de fusion pour induire une vibration et/ou une cavitation au sein du liquide de manière à contrôler les étapes de nucléation et/ou de croissance cristalline inhérentes au processus de solidification.

2. Une méthode selon la revendication 1, dans laquelle la fréquence des ultrasons se situe entre 16 et 100 kHz.

3. Une méthode selon la revendication 2, dans laquelle la fréquence des ultrasons se situe entre 20 et 40 kHz.

4. Une méthode selon l'une quelconque des revendications précédentes, comportant l'étape de soumission du liquide aux ultrasons à une température de liquide de 0,25°C à 0,5°C en-deçà de son point de fusion.

5. Une méthode selon l'une quelconque des revendications 1 à 4, dans laquelle les ultrasons sont appliqués pendant 5 secondes au maximum.

6. Une méthode selon la revendication 5, dans laquelle les ultrasons sont appliqués pendant 1 seconde maximum.

7. Une méthode de contrôle de la solidification d'un liquide selon la revendication 1, dans laquelle la température du liquide est maintenue à une température située entre son point de fusion et 1°C en-deçà de son point de fusion, et le liquide nucléé ou au moins partiellement solidifié est soumis aux ultrasons de manière à réduire la granulométrie cristalline du liquide.

8. Une méthode selon la revendication 7, dans laquelle la fréquence des ultrasons se situe entre 16 et 100 kHz.

9. Une méthode selon la revendication 8, dans laquelle la fréquence des ultrasons se situe entre 20 et 40 kHz.

10. Une méthode selon l'une quelconque des revendications 7 à 9, dans laquelle les ultrasons sont appliqués pendant 10 secondes au minimum.

11. Une méthode selon l'une quelconque des revendications 7 à 10, dans laquelle les ultrasons sont appliqués sous forme d'une série d'impulsions.

12. Une méthode selon l'une quelconque des revendications précédentes, dans laquelle le liquide est une denrée alimentaire, crème glacée par exemple, une denrée sous forme d'émulsion, chocolat, café, yaourt.

13. Une méthode de lyophilisation d'un échantillon, comportant les étapes de réduction de la température de l'échantillon jusqu'en-deçà de son point de fusion, de soumission de l'échantillon aux ultrasons à une température atteignant 1°C en-deçà de son point de fusion pour induire un degré contrôlé de nucléation au sein de l'échantillon, et un stade de soumission de l'échantillon à une pression réduite pour sublimer le solvant à partir de l'échantillon.

14. Un appareil de contrôle de la solidification d'un liquide, lequel appareil comporte:
(a) un réservoir pour une substance liquide;
(b) un moyen de réduction de la température de la substance liquide jusqu'à un point situé entre le point de fusion de ce liquide et 1°C en-deçà du point de fusion du liquide, et
(c) un résonateur comportant un moyen de génération d'une énergie ultrasonique, dans lequel le liquide s'écoule constamment à travers ou au-dessus du résonateur et dans lequel le moyen de génération de l'énergie ultrasonique est connecté, au minimum, à une surface qui entre en contact avec le liquide alors que le liquide passe à travers ou au-dessus du résonateur, induisant ainsi une vibration au sein du liquide de manière à contrôler la croissance cristalline au sein du liquide pendant sa solidification.

15. Un appareil selon la revendication 14, comportant un refroidisseur de surface à raclage.
